# EUROPEAN PATENT APPLICATION

(11) **EP 4 516 857 A1**
(43) Date of publication of application: **05.03.2025**
(21) Application number: 23796753.4
(22) Date of filing: 25.04.2023
(51) Int. Cl.: C08L 69/00, C08L 83/10, C08L 83/04, C08L 25/12, C08L 67/00, C08K 5/3475

(54) **THERMOPLASTIC RESIN COMPOSITION AND MOLDED ARTICLE MANUFACTURED THEREFROM**

(30) Priority: 29.04.2022 KR 20220053820
(71) Applicant: LOTTE CHEMICAL CORPORATION, Seoul 05551 (KR)
(72) Inventor: KIM, In-Chol, Uiwang-si, Gyeonggi-do 16073 (KR); RYOO, Heekyoung, Uiwang-si, Gyeonggi-do 16073 (KR); CHU, Donghui, Uiwang-si, Gyeonggi-do 16073 (KR)
(74) Representative: Germain Maureau
(86) International application number: PCT/KR2023/005593
(87) International publication number: WO 2023/211108

(57) **Abstract**

The present invention relates to a thermoplastic resin composition and a molded article manufactured therefrom, the thermoplastic resin composition including: (A) a polycarbonate resin; (B) a phenyl methacrylate-methyl methacrylate copolymer; (C) a polysiloxane-polycarbonate copolymer resin; (D) a siloxane-modified polyester; (E) a syndiotactic polystyrene; and (F) silicone oil.

## Description

### [Technical Field]

The present invention relates to a thermoplastic resin composition and a molded article manufactured therefrom.

### [Background Art]

The thermoplastic resins have a lower specific gravity than glass or metal and also, advantages of excellent moldability and impact resistance and the like. With the recent trend of lower cost, larger size, lighter electrical and electronic products, plastic products using the thermoplastic resins have rapidly replaced conventional glass or metal products and are more widely used from the electrical and electronic products to automobile parts.

Among the thermoplastic resins, polycarbonate (PC) resins have excellent impact resistance, heat resistance, strength, etc. and thus is variously applied to the electrical and electronic products and the automobile parts. Additionally, various colors can be implemented by introducing a colorant into the polycarbonate resin.

However, because the molded article basically has low scratch resistance, in order to use it to the vehicle parts, it is necessary to conduct post-processing such as surface treatment, coating, or the like, which may cause additional problems, such as increased production costs, environment pollution, and the like.

In order to improve the above problems, attempts have been made to introduce acrylate components to improve the scratch performance of polycarbonate resins. However, there are problems in that optical properties and mechanical properties deteriorate due to low compatibility with acrylate components and a large difference in refractive index between the polycarbonate resin and acrylate components.

In addition, there have been attempts to improve the scratch properties of polycarbonate resin by introducing a silicone-based surface modifier, but this also has the problem that compatibility between polycarbonate resin and the silicone-based surface modifier is not good, making it impossible to implement colors such as piano black, which have excellent aesthetics.

### [Disclosure]

### [Technical Problem]

The present invention provides a thermoplastic resin composition having excellent scratch resistance and impact resistance and excellent colorability to the extent that a piano black color can be implemented, and a molded article manufactured therefrom.

### [Technical Solution]

According to an embodiment, provided is a thermoplastic resin composition including: (A) a polycarbonate resin; (B) a phenyl methacrylate (PhMA)-methyl methacrylate (MMA) copolymer; (C) a polysiloxane-polycarbonate copolymer resin; (D) a siloxane modified polyester; (E) a syndiotactic polystyrene; and (F) silicone oil.

The thermoplastic resin composition may include 100 parts by weight of a base resin including (A) 50 to 80 wt% of the polycarbonate resin; (B) 5 to 25 wt% of the phenyl methacrylate-methyl methacrylate copolymer; and (C) 10 to 40 wt% of the polysiloxane-polycarbonate copolymer resin, (D) 0.5 to 2.5 parts by weight of the siloxane modified polyester; (E) 0.5 to 2.5 parts by weight of the syndiotactic polystyrene; and (F) 0.5 to 2.5 parts by weight of the silicone oil.

The (A) polycarbonate resin may have a weight average molecular weight of 10,000 to 200,000 g/mol.

In the (B) phenyl methacrylate-methyl methacrylate copolymer, a weight ratio of a phenyl methacrylate-derived component and a methyl methacrylate-derived component may be 20 : 80 to 50 : 50, and the (B) phenyl methacrylate-methyl methacrylate copolymer may have a weight average molecular weight of 5,000 to 50,000 g/mol.

The (C) polysiloxane-polycarbonate copolymer resin may include a polycarbonate block and a polysiloxane block, and may include 1 to 50 wt% of a polysiloxane block including a structural unit represented by Chemical Formula 2: 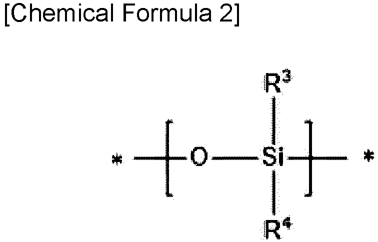 (In Chemical Formula 2, R³ and R⁴ are the same or different, and may be a hydrogen atom, a substituted or unsubstituted C1 to C20 alkyl group, a substituted or unsubstituted C2 to C20 alkenyl group, a substituted or unsubstituted C2 to C20 alkynyl group, a substituted or unsubstituted C1 to C20 alkoxy group, a substituted or unsubstituted C3 to C30 cycloalkyl group, a substituted or unsubstituted C3 to C30 cycloalkenyl group, a substituted or unsubstituted C3 to C30 cycloalkynyl group, a substituted or unsubstituted C6 to C30 aryl group, a substituted or unsubstituted C6 to C30 aryloxy group, a substituted or unsubstituted C6 to C30 aryl group, or NRR' (wherein R and R' are the same or different, and a hydrogen atom, or a substituted or unsubstituted C1 to C20 alkyl group)

The (C) polysiloxane-polycarbonate copolymer resin may have a weight average molecular weight of 15,000 to 50,000 g/mol.

The (D) siloxane modified polyester may include a structural unit represented by Chemical Formula 3: 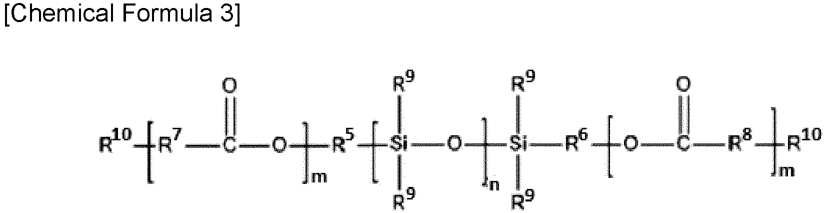 (In Chemical Formula 3, R⁵, R⁶, R⁷, and R⁸ are each independently a C1 to C5 alkylene group, R⁹ is a C1 to C4 alkyl group or a phenyl group, R¹⁰ is hydrogen, a hydroxyl group, or a methyl group, and m and n are each independently an integer of greater than or equal to 1)

In Chemical Formula 3, R⁵ and R⁶ may each be -(CH₂)₃-, R⁷ and R⁸ may each be -(CH₂)₅-, R⁹ may be a methyl group, and m and n may be integers of greater than or equal to 1 that satisfy m : n = 18 : 30.

The (E) syndiotactic polystyrene may have syndiotacticity of 97 to 100%.

The (F) silicone oil includes a structural unit represented by Chemical Formula 4: 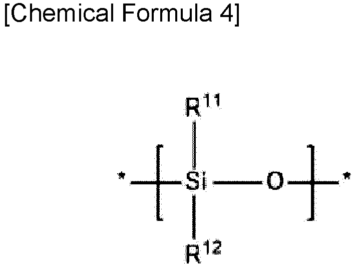 (In Chemical Formula 4, R¹¹ is a C1 to C6 alkyl group, and R¹² is a C6 to C12 aryl group)

The (F) silicone oil may be polymethylphenylsiloxane, polyethylphenylsiloxane, polypropylphenylsiloxane, polybutylphenylsiloxane, polypentylphenylsiloxane, polyhexylphenylsiloxane, or a combination thereof.

The thermoplastic resin composition may further include at least one additive selected from a flame retardant, a nucleating agent, a coupling agent, glass fiber, a plasticizer, a lubricant, mineral filler, an antibacterial agent, a release agent, a heat stabilizer, an antioxidant, an ultraviolet stabilizer, and an antistatic agent.

Meanwhile, a molded article manufactured from the thermoplastic resin composition according to an embodiment may be provided.

The molded article may have a notch Izod impact strength of 8 kgf-cm/cm or more, measured according to ASTM D256 standard at 1/8-inch thickness.

The molded article may have a brightness change (△L) of less than or equal to 4.0 before and after scratch resistance evaluation as measured using Erichsen Scratch Hardness Tester 430 P-I.

### [Advantageous Effects]

The thermoplastic resin composition according to an embodiment and a molded article manufactured therefrom have excellent scratch resistance and impact resistance, and excellent colorability to the extent that a piano black color can be realized.

### [Best Mode]

Hereinafter, embodiments of the present invention are described in detail. However, these embodiments are exemplary, and this disclosure is not limited thereto.

In the present specification, unless otherwise mentioned, "copolymerization" refers to a block copolymerization, a random copolymerization, or a graft-copolymerization and "copolymer" refers to a block copolymer, a random copolymer, or a graft copolymer.

In the present specification, unless otherwise mentioned, the average particle diameter of the rubbery polymer refers to a volume average diameter, and means a Z-average particle diameter measured using a dynamic light scattering analysis equipment.

In the present specification, unless otherwise mentioned, a weight average molecular weight is measured using gel permeation chromatography (GPC) with a 1200 series made by Agilent Technologies Inc. after dissolving the powder sample in an appropriate solvent (the standard sample is Shodex polystyrene).

According to an embodiment, a thermoplastic resin composition includes (A) a polycarbonate resin; (B) a phenyl methacrylate-methyl methacrylate copolymer; (C) a polysiloxane-polycarbonate copolymer resin; (D) a siloxane modified polyester; (E) a syndiotactic polystyrene; and (F) silicone oil.

Hereinafter, each component of the thermoplastic resin composition is described in detail.

### (A) Polycarbonate Resin

The (A) polycarbonate (PC) resin is a polyester having a carbonate bond, but has no particular limit in its type, and may include any polycarbonate resin usable in the resin composition field.

For example, the (A) polycarbonate resin may be prepared by reacting a diphenol compound represented by Chemical Formula 1 with a compound selected from phosgene, halogen acid esters, carbonate esters, and a combination thereof.

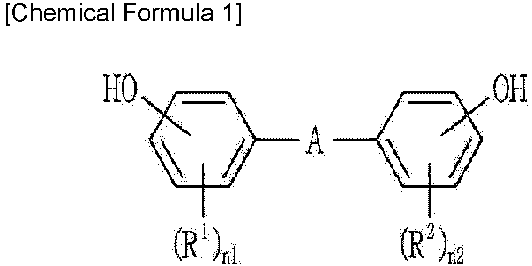

In Chemical Formula 1,
A is a single bond, a substituted or unsubstituted C1 to C30 alkylene group, a substituted or unsubstituted C2 to C5 alkenylene group, a substituted or unsubstituted C2 to C5 alkylidene group, a substituted or unsubstituted C1 to C30 haloalkylene group, a substituted or unsubstituted C5 to C6 cycloalkylene group, a substituted or unsubstituted C5 to C6 cycloalkenylene group, a substituted or unsubstituted C5 to C10 cycloalkylidene group, a substituted or unsubstituted C6 to C30 arylene group, a substituted or unsubstituted C1 to C20 alkoxylene group, a halogenic acid ester group, a carbonate ester group, a linking group selected from C=O, S, and SO₂, R¹ and R² are each independently a substituted or unsubstituted C1 to C30 alkyl group or a substituted or unsubstituted C6 to C30 aryl group, and n1 and n2 are each independently an integer ranging from 0 to 4.

Two or more types of the diphenols represented by Chemical Formula 1 may be combined to constitute a repeating unit of the polycarbonate resin.

Specific examples of the diphenols may include hydroquinone, resorcinol, 4,4'-dihydroxydiphenyl, 2,2-bis(4-hydroxyphenyl)propane (also referred to as "bisphenol-A"), 2,4-bis(4-hydroxyphenyl)-2-methylbutane, bis(4-hydroxyphenyl)methane, 1,1-bis(4-hydroxyphenyl)cyclohexane, 2,2-bis(3-chloro-4-hydroxyphenyl)propane, 2,2-bis(3-methyl-4-hydroxyphenyl)propane, 2,2-bis(3,5-dimethyl-4-hydroxyphenyl)propane, 2,2-bis(3,5-dichloro-4-hydroxyphenyl)propane, 2,2-bis(3,5-dibromo-4-hydroxyphenyl)propane, bis(4-hydroxyphenyl)sulfoxide, bis(4-hydroxyphenyl)ketone, bis(4-hydroxyphenyl)ether, and the like. Among the diphenols, 2,2-bis(4-hydroxyphenyl)propane, 2,2-bis(3-methyl-4-hydroxyphenyl)propane, 2,2-bis(3,5-dimethyl-4-hydroxyphenyl)propane, 2,2-bis(3,5-dichloro-4-hydroxyphenyl)propane, or 1,1-bis(4-hydroxyphenyl)cyclohexane may be desirably used. 2,2-bis(4-hydroxyphenyl)propane may be more desirably used.

The (A) polycarbonate resin may be a mixture of copolymers obtained using two or more types of diphenols. Additionally, the polycarbonate resin may be linear polycarbonate resin, branched polycarbonate resin, polyestercarbonate copolymer resin, and the like.

A specific example of the linear polycarbonate resin may be a bisphenol-A polycarbonate resin. Specific examples of the branched polycarbonate resin may be a resin prepared by reacting a multi-functional aromatic compound such as trimellitic anhydride, trimellitic acid, and the like with diphenols and a carbonate. The polyestercarbonate copolymer resin may be prepared by reacting a difunctional carboxylic acid with diphenols and carbonate, and the carbonate used here may be a diaryl carbonate such as diphenyl carbonate or ethylene carbonate.

The (A) polycarbonate resin may have a weight average molecular weight of 10,000 to 100,000 g/mol, for example, 14,000 to 50,000 g/mol. When the weight average molecular weight of the polycarbonate resin is within the above range, excellent impact resistance and fluidity can be obtained.

The (A) polycarbonate resin may be included in an amount of 50 to 80 wt%, for example 50 to 70 wt%, for example 60 to 70 wt%, based on 100 wt% of the base resin including the (A) polycarbonate resin, the (B) phenyl methacrylate-methyl methacrylate copolymer, and the (C) polysiloxane-polycarbonate copolymer resin described later. Within the above weight range, the thermoplastic resin composition of the present invention and the molded article manufactured therefrom can exhibit excellent mechanical properties.

The (A) polycarbonate resin may have a melt flow index of 10 to 70 g/10min, for example, 15 to 65 g/10min, as measured at 300°C and 1.2 kg load according to ASTM D1238. When a polycarbonate resin having a melt flow index in the above range is used, the thermoplastic resin composition and a molded article manufactured therefrom can exhibit excellent moldability and excellent impact resistance.

Meanwhile, the (A) polycarbonate resin can be used by mixing two or more polycarbonate resins with different weight average molecular weights or melt flow indices. By using a mixture of polycarbonate resins of different weight average molecular weights or melt flow indices, it is easy to adjust the thermoplastic resin composition to have the desired fluidity.

### (B) Phenyl Methacrylate-Methyl Methacrylate Copolymer

The (B) phenyl methacrylate (PhMA)-methyl methacrylate (MMA) copolymer may improve the scratch resistance and impact resistance of a thermoplastic resin composition, while also improving the weather resistance.

The (B) phenyl methacrylate-methyl methacrylate copolymer may have a weight average molecular weight of 5,000 to 50,000 g/mol, for example 10,000 to 50,000 g/mol, for example 10,000 to 30,000 g/mol, for example 30,000 to 50,000 g/mol.

In the (B) phenyl methacrylate-methyl methacrylate copolymer, a weight ratio of a phenyl methacrylate-derived component and a methyl methacrylate-derived component may be 20 : 80 to 50 : 50, for example 25 : 75 to 45 : 55, for example 30 : 70 to 40 : 60.

The (B) phenyl methacrylate-methyl methacrylate copolymer may be included in an amount of 5 to 25 wt%, for example 10 to 25 wt%, for example 10 to 20 wt% based on 100 wt% of the base resin. Within the above weight range, the thermoplastic resin composition and the molded article manufactured therefrom can exhibit excellent scratch resistance, impact resistance, and weather resistance.

### (C) Polysiloxane-polycarbonate Copolymer Resin

The (C) polysiloxane-polycarbonate copolymer (Si-PC) resin may be used with the (A) polycarbonate resin, the (B) phenyl methacrylate-methyl methacrylate copolymer, and the (D) siloxane modified polyester described later to improve compatibility of the components in the thermoplastic resin composition.

Conventionally, in order to improve scratch resistance of the polycarbonate resin composition, the silicon-based surface modifier has been included with the polycarbonate resin, which may improve scratch resistance of the polycarbonate resin composition but have a problem of deteriorating mechanical properties due to low compatibility between the polycarbonate resin and the silicon-based surface modifier or lowering colorability.

The present invention can solve the above problem by improving the compatibility of each component by including (C) a polysiloxane-polycarbonate copolymer resin in a resin composition including the (A) polycarbonate resin, the (B) phenyl methacrylate-methyl methacrylate copolymer, and the (D) siloxane modified polyester.

The (C) polysiloxane-polycarbonate copolymer resin may include a polycarbonate block and a polysiloxane block.

The polycarbonate block may include the same carbonate structural unit as that included in the aforementioned (A) polycarbonate resin.

The polysiloxane block may include a structural unit represented by Chemical Formula 2. 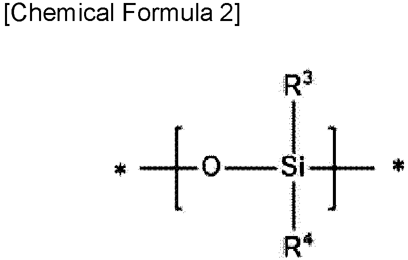 (In Chemical Formula 2, R³ and R⁴ are the same or different, and may be a hydrogen atom, a substituted or unsubstituted C1 to C20 alkyl group, a substituted or unsubstituted C2 to C20 alkenyl group, a substituted or unsubstituted C2 to C20 alkynyl group, a substituted or unsubstituted C1 to C20 alkoxy group, a substituted or unsubstituted C3 to C30 cycloalkyl group, a substituted or unsubstituted C3 to C30 cycloalkenyl group, a substituted or unsubstituted C3 to C30 cycloalkynyl group, a substituted or unsubstituted C6 to C30 aryl group, a substituted or unsubstituted C6 to C30 aryloxy group, a substituted or unsubstituted C6 to C30 aryl group, or NRR' (wherein R and R' are the same or different, and a hydrogen atom, or a substituted or unsubstituted C1 to C20 alkyl group)

The polysiloxane block may be included in an amount of 1 to 50 wt%, for example 1 to 40 wt%, for example 1 to 30 wt%, for example 1 to 20 wt%, for example 1 to 10 wt%, based on 100 wt% of the polysiloxane-polycarbonate copolymer resin, but is not limited thereto.

By including the polysiloxane block in the (C) polysiloxane-polycarbonate copolymer resin within the above weight range, the impact resistance of the thermoplastic resin composition and the molded article manufactured therefrom can be excellent, and processing such as extrusion and injection molding can be facilitated.

The (C) polysiloxane-polycarbonate copolymer resin may have a weight average molecular weight of 10,000 to 100,000 g/mol, for example, 10,000 to 50,000 g/mol, for example, 15,000 to 30,000 g/mol. Within the above range, the thermoplastic resin composition and the molded article manufactured therefrom can have excellent impact resistance.

The (C) polysiloxane-polycarbonate copolymer resin may be included in an amount of 10 to 40 wt%, for example 10 to 30 wt%, for example 20 to 40 wt%, for example 20 to 30 wt% based on 100 wt% of the base resin. Within the above range, the thermoplastic resin composition and the molded article manufactured therefrom may have excellent impact resistance and excellent compatibility between components in the composition.

### (D) Siloxane modified Polyester

The (D) siloxane modified polyester may improve the scratch resistance and colorability of the thermoplastic resin composition according to the present invention.

The (D) siloxane modified polyester may be represented by Chemical Formula 3: 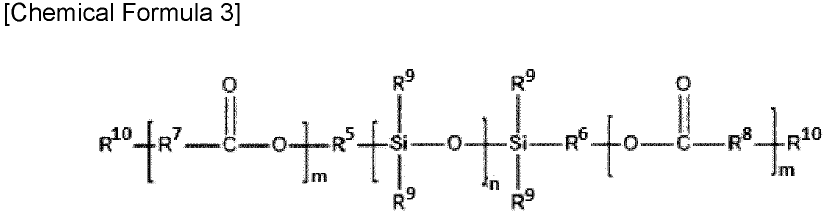 (In Chemical Formula 3, R⁵, R⁶, R⁷, and R⁸ are each independently a C1 to C5 alkylene group, R⁹ is a C1 to C4 alkyl group or a phenyl group, R¹⁰ is hydrogen, a hydroxyl group, or a methyl group, and m and n are each independently an integer of greater than or equal to 1)

In an embodiment, in Chemical Formula 3, R⁵ and R⁶ may each be - (CH₂)₃-, R⁷ and R⁸ may each be -(CH₂)₃-, R⁹ may be a methyl group, and m and n may be integers greater than or equal to 1 that satisfy m : n = 18 : 30.

The (D) siloxane modified polyester may be included in an amount of 0.5 to 2.5 parts by weight, for example 1.0 to 2.5 parts by weight, for example 1.0 to 2.0 parts by weight based on 100 parts by weight of the base resin including (A) to (C). Within the above parts by weight range, the scratch resistance and colorability of the thermoplastic resin composition and the molded article manufactured therefrom may be improved.

### (E) Syndiotactic Polystyrene

The (E) syndiotactic polystyrene may improve the impact resistance of the thermoplastic resin composition according to the present invention.

Polystyrene is generally divided into atactic, isotactic, and syndiotactic structures depending on the position of the benzene ring in the side chain. Atactic polystyrene has an irregular arrangement of the benzene rings, while isotactic polystyrene has a structure in which the benzene rings are arranged on one side of the polymer backbone. In contrast, syndiotactic polystyrene has a structure in which benzene rings are arranged in a regular, alternating pattern.

Among these, syndiotactic polystyrene may be prepared using a catalyst system including a styrene monomer, a metallocene catalyst, and a cocatalyst. The metallocene catalyst has a structure in which one or two cycloalkane dienyl groups (cyclopentadienyl groups, indenyl groups, fluorenyl groups and derivatives thereof) are linked to a Group IV transition metal complex of the periodic table, such as Ti, Zr, or Hf.

As a prior art for polystyrene having high stereoregularity, high melting point and excellent molecular weight distribution, U.S. Patent No. 6,010,974 discloses a new alkyl-bridged dinuclear metallocene catalyst, a silyl-bridged dinuclear metallocene catalyst, and a method for polymerizing styrene monomer using an alkyl-silyl bridged dinuclear metallocene catalyst, and U.S. Patent No. 6,284,700 discloses syndiotactic polystyrene using a catalyst system consisting of a metallocene catalyst and a cocatalyst. The disclosures in these patents are incorporated by reference herein in their entirety by reference.

A syndiotacticity of the (E) syndiotactic polystyrene may be 97 to 100%.

The (E) syndiotactic polystyrene may be included in an amount of 0.5 to 2.5 parts by weight, for example 1.0 to 2.5 parts by weight, for example 1.0 to 2.0 parts by weight, based on 100 parts by weight of the base resin. Within the above weight range, the thermoplastic resin composition and the molded article manufactured therefrom can have excellent impact resistance.

### (F) Silicone Oil

The (F) silicone oil may improve the impact resistance of the thermoplastic resin composition of the present invention.

The (F) silicone oil may include a structural unit represented by Chemical Formula 4:

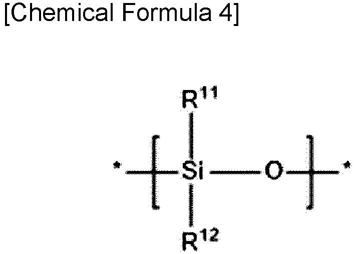

In Chemical Formula 4, R¹¹ is a C1 to C6 alkyl group, and R¹² is a C6 to C12 aryl group. For example, R¹¹ may be a methyl group, an ethyl group, a propyl group, a butyl group, a pentyl group, or a hexyl group, and R¹² may be a phenyl group, a naphthyl group, or a biphenyl group.

For example, the (F) silicone oil may be polymethylphenylsiloxane, polyethylphenylsiloxane, polypropylphenylsiloxane, polybutylphenylsiloxane, polypentylphenylsiloxane, polyhexylphenylsiloxane, or a combination thereof.

In an embodiment, the (F) silicone oil may be polymethylphenylsiloxane.

The (F) silicone oil may have a refractive index of 1.42 to 1.59, for example 1.45 to 1.55, for example 1.48 to 1.52. Within the range, colorability and impact resistance of the thermoplastic resin composition and the molded article manufactured therefrom may be improved.

The (F) silicone oil may be included in an amount of 0.5 to 2.5 parts by weight, for example 1.0 to 2.5 parts by weight, for example 1.0 to 2.0 parts by weight based on 100 parts by weight of the base resin. Within the above weight range, the thermoplastic resin composition and the molded article manufactured therefrom can have excellent impact resistance.

### (G) Other Additives

The thermoplastic resin composition according to an embodiment may further include, in addition to the components (A) to (F), one or more additives necessary to balance the properties under conditions of maintaining excellent scratch resistance, impact resistance, and colorability, or depending on the final use of the thermoplastic resin composition.

Specifically, the additives may include at least one additive selected from a flame retardant, a nucleating agent, a coupling agent, glass fiber, a plasticizer, a lubricant, mineral filler, an antibacterial agent, a release agent, a heat stabilizer, an antioxidant, an ultraviolet stabilizer, and an antistatic agent.

These additives may be appropriately included within a range that does not impair the physical properties of the thermoplastic resin composition, and may specifically be included in an amount of 20 parts by weight or less based on 100 parts by weight of the base resin, but are not limited thereto.

The thermoplastic resin composition of the present invention can be prepared by a known method for preparing a thermoplastic resin composition.

For example, the thermoplastic resin composition of the present invention can be prepared in a form of pellets by mixing the components of the present invention and other additives and then melting/kneading them in an extruder.

A molded article according to an embodiment of the present invention may be manufactured from the aforementioned thermoplastic resin composition.

A molded article manufactured by appropriately adding a mixture of quinone dyes exhibiting a black color to the thermoplastic resin composition described above can realize a piano black color, which is a high-quality, deep black color, due to the synergistic effect of each component of the thermoplastic resin composition.

The molded article may have a notched Izod impact strength of greater than or equal to 8 kgf-cm/cm, for example greater than or equal to 9 kgf-cm/cm, for example greater than or equal to 10 kgf-cm/cm at 1/8-inch thickness as measured in accordance with ASTM D256.

The molded article may have a brightness change (△L) of less than or equal to 4.0, for example less than or equal to 4.0, for example less than or equal to 3.0 before and after scratch resistance evaluation as measured using Scratch Hardness Tester 430 P-I of Erichsen GmbH & Co. KG.

### [Mode for Invention]

Hereinafter, preferred embodiments of the present invention will be described. However, the following example is only a preferred example of the present invention, and the present invention is not limited by the following examples.

### Examples 1 to 5 and Comparative Examples 1 to 6

The thermoplastic resin compositions according to Examples 1 to 5 and Comparative Examples 1 to 6 were respectively prepared according to each component content ratio shown in Table 1.

The components shown in Table 1 and a black quinone-based dye mixture in an amount of 0.5 parts by weight based on 100 parts by weight of a base resin were added and then, dry-mixed, quantitatively and continuously fed into a feed section of a twin-screw extruder (L/D = 29, diameter = 45 mm), and melted and kneaded. Herein, the twin-screw extruder was set at a barrel temperature of about 280°C. Subsequently, each of the thermoplastic resin compositions pelleted from the twin-screw extruder was dried at about 80°C for about 4 hours and then, injection-molded into specimens for measuring physical properties by using a 6 oz injection molding machine at a cylinder temperature of about 280°C and a mold temperature of about 60°C.

In Table 1, (A) to (C) exhibit wt% of each component based on 100 wt% of the base resin, and (D) to (F) exhibit its parts by weight based on 100 parts by weight of the base resin ((A)+(B)+(C)).

**(Table 1)**

| | Example 1 | Example 2 | Example 3 | Example 4 | Example 5 | Compara tive Example 1 | Compara tive Example 2 | Compara tive Example 3 | Compara tive Example 4 | Compara tive Example 5 | Compar ative Exampl e 6 |
|---|---|---|---|---|---|---|---|---|---|---|---|
| (A) | 60 | 70 | 50 | 60 | 60 | 80 | 80 | 60 | 60 | 60 | 60 |
| (B) | 20 | 10 | 20 | 20 | 20 | - | 20 | 20 | 20 | 20 | 20 |
| (C) | 20 | 20 | 30 | 20 | 20 | 20 | - | 20 | 20 | 20 | 20 |
| (D) | 1.5 | 1.5 | 1.5 | 1.5 | 1.5 | 1.5 | 1.5 | - | 1.5 | 1.5 | 3.0 |
| (E) | 2.0 | 2.0 | 2.0 | 1.0 | 2.0 | 2.0 | 2.0 | 2.0 | - | 2.0 | 2.0 |
| (F) | 2.0 | 2.0 | 2.0 | 2.0 | 1.0 | 2.0 | 2.0 | 2.0 | 2.0 | - | 2.0 |

Each component in Table 1 is described as follows.

### (A) Polycarbonate resin

A bisphenol-A linear polycarbonate resin having a weight average molecular weight of about 25,000 g/mol was used.

### (B) Phenyl methacrylate-methyl methacrylate copolymer

A phenyl methacrylate-methyl methacrylate copolymer with a weight average molecular weight of about 30,000 g/mol and including about 30 wt% of phenyl methacrylate-derived component and about 70 wt% of methyl methacrylate-derived component was used.

### (C) Polysiloxane-polycarbonate copolymer resin

A polysiloxane-polycarbonate copolymer resin with a weight average molecular weight of about 24,000 g/mol and including about 97 to 94 wt% of polycarbonate block and about 3 to 6 wt% of polysiloxane block was used.

### (D) Siloxane modified polyester

H-Si 6441 P of Evonik Industries was used.

### (E) Syndiotactic polystyrene

130ZC of Idemitsu Kosan Co., Ltd. was used.

### (F) Silicone oil

TSF437 of Momentive Corp. was used.

### Experimental Examples

Experiment results are shown in Table 2.
(1) Impact resistance (unit: kgf-cm/cm): Notched Izod impact strength was measured for 1/8 inch-thick specimens according to ASTM D256.
(2) Colorability: A brightness value (L) was measured in a specular component excluded (SCE) mode by using CM-3700D, Konica Minolta Sensing Inc. The lower the brightness, the better the black color implementation, so it was judged that the colorability was excellent.
(3) Scratch resistance: After 20 times applying scratches to the specimens in a grid pattern at an interval of 2 mm by using a scratch hardness tester 430 P-I made by Erichsen GmbH & Co. KG under the condition of a test tip with a diameter of 1 mm under a load 10 N at a cutting speed 1 m/min, the specimens were measured with respect to brightness changes (ΔL) before and after the scratch evaluation in the specular component excluded (SCE) mode by using CM-3700D of Konica Minolta Sensing Inc. Because the applied scratches generated microcracks on the specimen surface, creating flaws, which increased the brightness of the specimens, the higher brightness changes (ΔL), the more damages due to the scratches, which was judged to lower scratch resistance.

**(Table 2)**

| | Exam ple 1 | Exam ple 2 | Exam ple 3 | Exam ple 4 | Exam ple 5 | Comp arative Examp le 1 | Comp arative Examp le 2 | Comp arative Examp le 3 | Comp arative Examp le 4 | Comp arative Examp le 5 | Comp arative Exam ple 6 |
|---|---|---|---|---|---|---|---|---|---|---|---|
| Impact strength | 15 | 20 | 18 | 10 | 11 | 70 | 6 | 13 | 4 | 7 | 18 |
| Brightness (L) | 0.8 | 1.0 | 0.6 | 0.7 | 0.7 | 0.9 | 6.5 | 0.7 | 0.8 | 0.7 | 2.3 |
| Brightness change (△L) | 1.2 | 2.4 | 1.1 | 1.0 | 1.0 | 4.5 | 1.1 | 4.3 | 1.0 | 1.0 | 1.1 |

Referring to Tables 1 and 2, when a thermoplastic resin composition was prepared by using , the polycarbonate resin, the polysiloxane-polycarbonate copolymer resin, the phenyl methacrylate-methyl methacrylate copolymer, the siloxane modified polyester, the syndiotactic polystyrene, and the silicone oil in each optimal amount, it was confirmed to implement a thermoplastic resin composition having excellent impact resistance, scratch resistance, and coloring properties and a molded article manufactured therefrom were confirmed.

While this invention has been described in connection with what is presently considered to be practical example embodiments, it is to be understood that the invention is not limited to the disclosed embodiments. On the contrary, it is intended to cover various modifications and equivalent arrangements included within the spirit and scope of the appended claims.

## Claims

1. A thermoplastic resin composition, comprising
(A) a polycarbonate resin;
(B) a phenyl methacrylate-methyl methacrylate copolymer;
(C) a polysiloxane-polycarbonate copolymer resin;
(D) a siloxane modified polyester;
(E) a syndiotactic polystyrene; and
(F) silicone oil.

2. The thermoplastic resin composition of claim 1, wherein
the thermoplastic resin composition comprises
100 parts by weight of a base resin, including
(A) 50 to 80 wt% of the polycarbonate resin;
(B) 5 to 25 wt% of the phenyl methacrylate-methyl methacrylate copolymer; and
(C) 10 to 40 wt% of the polysiloxane-polycarbonate copolymer resin,
(D) 0.5 to 2.5 parts by weight of the siloxane modified polyester;
(E) 0.5 to 2.5 parts by weight of the syndiotactic polystyrene; and
(F) 0.5 to 2.5 parts by weight of the silicone oil.

3. The thermoplastic resin composition of claim 1 or claim 2, wherein
the (A) polycarbonate resin has a weight average molecular weight of 10,000 to 200,000 g/mol.

4. The thermoplastic resin composition of any one of claim 1 to claim 3, wherein
in the (B) phenyl methacrylate-methyl methacrylate copolymer, a weight ratio of a phenyl methacrylate-derived component and a methyl methacrylate-derived component is 20 : 80 to 50 : 50, and
the (B) phenyl methacrylate-methyl methacrylate copolymer has a weight average molecular weight of 5,000 to 50,000 g/mol.

5. The thermoplastic resin composition of any one of claim 1 to claim 4, wherein
the (C) polysiloxane-polycarbonate copolymer resin comprises a polycarbonate block and a polysiloxane block, and the thermoplastic resin composition comprises 1 to 50 wt% of a polysiloxane block including a structural unit represented by Chemical Formula 2. 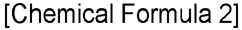 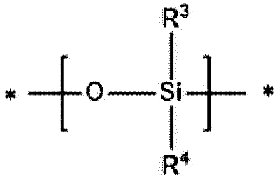
(wherein, in Chemical Formula 2, R³ and R⁴ are the same or different, and are a hydrogen atom, a substituted or unsubstituted C1 to C20 alkyl group, a substituted or unsubstituted C2 to C20 alkenyl group, a substituted or unsubstituted C2 to C20 alkynyl group, a substituted or unsubstituted C1 to C20 alkoxy group, a substituted or unsubstituted C3 to C30 cycloalkyl group, a substituted or unsubstituted C3 to C30 cycloalkenyl group, a substituted or unsubstituted C3 to C30 cycloalkynyl group, a substituted or unsubstituted C6 to C30 aryl group, a substituted or unsubstituted C6 to C30 aryloxy group, a substituted or unsubstituted C6 to C30 aryl group, or NRR' (wherein R and R' are the same or different, and a hydrogen atom, or a substituted or unsubstituted C1 to C20 alkyl group)

6. The thermoplastic resin composition of any one of claim 1 to claim 5, wherein
the (C) polysiloxane-polycarbonate copolymer resin has a weight average molecular weight of 15,000 to 50,000 g/mol.

7. The thermoplastic resin composition of any one of claim 1 to claim 6, wherein
the (D) siloxane modified polyester is represented by Chemical Formula 3: 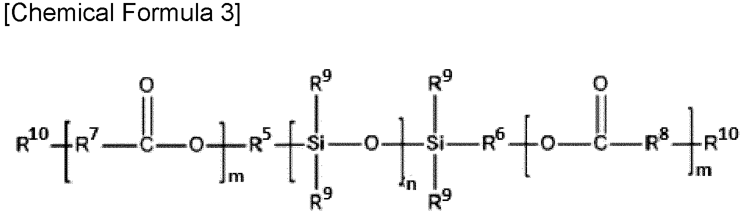
(wherein, in Chemical Formula 3, R⁵, R⁶, R⁷, and R⁸ are each independently an alkylene group having 1 to 5 carbon atoms, R⁹ is an alkyl group or phenyl group having 1 to 4 carbon atoms, R¹⁰ is hydrogen, a hydroxyl group or a methyl group, and m and n are each independently an integer of greater than or equal to 1)

8. The thermoplastic resin composition of claim 7, wherein
in Chemical Formula 3, R⁵ and R⁶ are each -(CH₂)₃-, R⁷ and R⁸ are each -(CH₂)₃-, R⁹ is a methyl group, and m and n are integers of greater than or equal to 1 that satisfy m : n = 18 : 30.

9. The thermoplastic resin composition of any one of claim 1 to claim 8, wherein
the (E) syndiotactic polystyrene has syndiotacticity of 97 to 100%.

10. The thermoplastic resin composition of any one of claim 1 to claim 9, wherein
the (F) silicone oil comprises a structural unit represented by Chemical Formula 4: 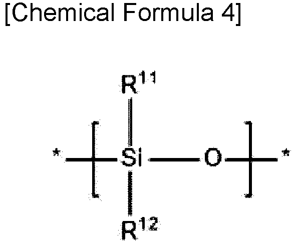
(wherein, in Chemical Formula 4, R¹¹ is a C1 to C6 alkyl group and R¹² is a C6 to C12 aryl group)

11. The thermoplastic resin composition of any one of claim 1 to claim 10, wherein
the (F) silicone oil is polymethylphenylsiloxane, polyethylphenylsiloxane, polypropylphenylsiloxane, polybutylphenylsiloxane, polypentylphenylsiloxane, polyhexylphenylsiloxane, or a combination thereof.

12. The thermoplastic resin composition of any one of claim 1 to claim 11, wherein
the thermoplastic resin composition further comprises at least one additive selected from a flame retardant, a nucleating agent, a coupling agent, glass fiber, a plasticizer, a lubricant, mineral filler, an antibacterial agent, a release agent, a heat stabilizer, an antioxidant, an ultraviolet stabilizer, and an antistatic agent.

13. A molded article manufactured from the thermoplastic resin composition of any one of claim 1 to claim 12.

14. The molded article of claim 13, wherein
the molded article has a notched Izod impact strength of greater than or equal to 8 kgf-cm/cm at 1/8-inch thickness as measured in accordance with ASTM D256.

15. The molded article of claim 13 or claim 14, wherein
the molded article has a brightness change (△L) of less than or equal to 4.0 before and after scratch resistance evaluation as measured using Erichsen Scratch Hardness Tester 430 P-I.
